# EUROPEAN PATENT APPLICATION

(11) **EP 2 699 062 A2**
(43) Date of publication of application: **19.02.2014**
(21) Application number: 12184612.5
(22) Date of filing: 17.09.2012
(51) Int. Cl.: H05B 37/02

(54) **Light emitting device and luminaire having the same**

(30) Priority: 15.06.2012 JP 2012135959
(71) Applicant: Toshiba Lighting & Technology Corporation, Yokosuka-shi Kanagawa 237-8510 (JP)
(72) Inventor: Ishida, Yukio, Kanagawa, 237-8510 (JP); Morimoto, Yasushi, Kanagawa, 237-8510 (JP)
(74) Representative: Bokinge, Ole

(57) **Abstract**

According to an embodiment, an illumination control system (10) includes a luminaire (5), plural monitoring cameras (9)and a central control device (100). The central control (100) device receives monitoring images that include one monitoring image picked up by each of the plural monitoring cameras (9). The central control device (100) integrates the monitoring images and generates one integrated image. The central control device (100) sets a monitoring part in the integrated image The central control device allocates the monitoring part that is set in the integrated image in a non-overlapping manner and sets each of the allocated monitoring parts in a respective one of the monitoring images. The central control device (100) controls the luminaire (5) based on a result of detection processing in the allocated monitoring parts.

## Description

### FIELD

Embodiments described herein relate generally to an illumination control system.

### BACKGROUND

According to a related art, there is an illumination control system which controls illuminance on a desk or floor at a predetermined level using an illuminance sensor. There is also an illumination control system having a motion sensor which detects the presence or absence of a person. In the illumination control system having a motion sensor, for example, a motion sensor and a luminaire are linked to each other in advance, and when the motion sensor detects the presence of a person, the luminaire linked to the motion sensor that detects the presence of a person is switched on.

Now, a technique using a monitoring camera as a motion sensor is known. In this technique using a monitoring camera, a monitoring part that is a target of detection processing for detecting the presence or absence of a person, in a monitoring image picked up by the monitoring camera, is set based on brightness distribution.

### DESCRIPTION OF THE DRAWINGS

FIG. 1 is a block diagram showing an example of the overall configuration of an illumination control system according to a first embodiment.
FIG. 2 is a block diagram showing an example of the configuration of a central control device of the first embodiment.
FIG. 3 shows an example of information stored in a first storage table of the first embodiment.
FIG. 4 shows an example of information stored in a second storage table of the first embodiment.
FIG. 5 shows an example of the relation between a motion sensor and a monitoring image in the first embodiment.
FIG. 6-1 shows an example of a monitoring image received in the case shown in FIG. 5 by a receiving unit of the first embodiment.
FIG. 6-2 shows an example of a monitoring image received in the case shown in FIG. 5 by the receiving unit.
FIG. 6-3 shows an example of a monitoring image received in the case shown in FIG. 5 by the receiving unit.
FIG. 7 shows an example of an integrated image generated by a generating unit of the first embodiment.
FIG. 8 shows an example of a monitoring part that is set by a first setting unit of the first embodiment.
FIG. 9 shows an example of a monitoring part that is set in each monitoring image by a second setting unit of the first embodiment.
FIG. 10 is a view for explaining an identifying unit and a correcting unit of the first embodiment.
FIG. 11 is a flowchart showing an example of the flow of monitoring part setting processing by the central control device.
FIG. 12 is a flowchart showing an example of the flow of monitoring part correction processing by the central control device.
FIG. 13 is a block diagram showing an example of the configuration of the central control device which does not carry out the monitoring part setting processing but carries out the monitoring part correction processing.

### DETAILED DESCRIPTION

According to one embodiment, an illumination control system includes a luminaire, plural monitoring cameras, and a central control device. The central control device includes a receiving unit which receives each monitoring image picked up by each of the plural monitoring cameras. The central control device also includes a generating unit which integrates each monitoring image from each monitoring camera received by the receiving unit and generates one integrated image, and a first setting unit which sets a monitoring part that is an image part to be a target of detection processing for detecting presence or absence of a person, in the integrated image generated by the generating unit. The central control device also includes a second setting unit which allocates the monitoring part that is set in the integrated image by the first setting unit to each monitoring image from each monitoring camera in a non-overlapping manner and thus sets a monitoring part in each monitoring image. The central control device also includes an illumination control unit which controls the luminaire based on a result of the detection processing in the monitoring part that is set in each monitoring image by the second setting unit.

According to another embodiment, in the illumination control system, as the first setting unit accepts from a user a setting of an image part that is not covered as a target of the detection processing, the first setting unit sets a part excluding the accepted image part, in the monitoring image.

According to another embodiment, in the illumination control system, the second setting unit sets a boundary in a part where plural monitoring images overlap each other in the integrated image and allocates the monitoring part that is set in the integrated image to each monitoring image based on the boundary that is set, thus allocating the monitoring part in a non-overlapping manner.

According to another embodiment, in the illumination control system, the second setting unit sets a monitoring part in each of the plural monitoring images and does not set a part that is already set in one of the plural monitoring images, of the monitoring part that is set in the integrated image, as the monitoring part again, thus allocating the monitoring part in a non-overlapping manner.

According to another embodiment, in the illumination control system, the integrated image is generated by integrating the monitoring images after correcting a distortion in an overlapping part of each monitoring image.

According to another embodiment, in the illumination control system, the central control device includes a first storage unit which stores, for each monitoring image, first position information for identifying the monitoring part that is set in the monitoring image. The central control device also includes a second storage unit which stores, for each monitoring image, a partial image of an arbitrary part of the monitoring image and second position information for identifying the partial image in correspondence to each other, and an identifying unit which identifies the partial image from the monitoring image received by the receiving unit. The central control device also includes a correcting unit which, if there is a shift between the second position information read out from the second storage unit and a position of the partial image identified by the identifying unit, corrects a position of the monitoring part identified based on the first position information stored in the first storage unit, by an amount equivalent to the shift.

Hereinafter, various embodiments will be described with reference to the accompanying drawings. In the embodiments, configurations having the same functions are denoted by the same reference numerals and duplicate explanation is not given. The illumination control systems described in the following embodiments are simply examples and are not intended to limit the invention. The following embodiments may be combined properly within a range that does not cause contradiction.

### First Embodiment

### Example of Overall Configuration of Illumination Control System According to First Embodiment

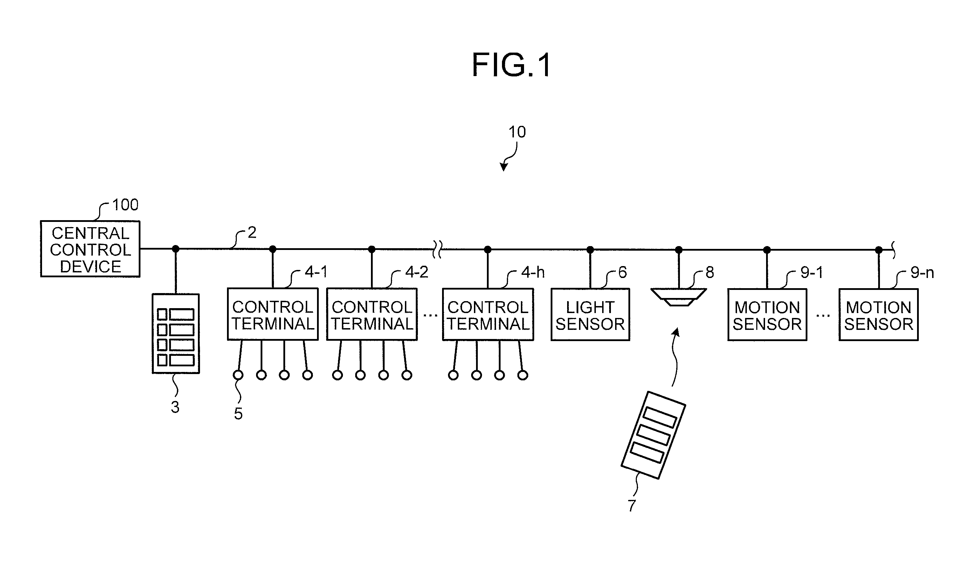

FIG. 1 is a block diagram showing an example of the overall configuration of an illumination control system according to a first embodiment. In the example shown in FIG. 1, an illumination control system 10 includes a central control device 100, a two-wire transmission line 2, a wall switch 3, h control terminals 4, a luminaire 5, a light sensor 6, a wireless transmitter 7, a wireless receiver 8, and n motion sensors 9. Each unit in the illumination control system 10 is interconnected via the transmission line 2. The example shown in FIG. 1 describes a case where there are n motion sensors 9 and h control terminals 4. However, possible configurations are not limited to this example and the motion sensors 9 and the control terminals 4 may be provided in arbitrary numbers.

The central control device 100 remotely controls the luminaire 5 installed in each illumination area such as offices and various facilities. The central control device 100 also sets a monitoring part that is an image part to be a target of detection processing for detecting the presence or absence of a person, for each of the plural motion sensors 9. Details of the central control device 100 will be described later and therefore are not described further here.

The wall switch 3 accepts an operation to the luminaire from a user and outputs the accepted operation content to the central control device 100 via the transmission line 2. For example, the wall switch 3 accepts an operation to switch off the luminaire, an operation to switch on the luminaire, an operation to change brightness or the like and outputs the accepted operation to the central control device 100.

The control terminal 4 is connected to the luminaire 5. The example shown in FIG. 1 describes a case where each of the control terminals 4-1 to 4-h can be connected four lines of luminaires 5. However, possible configurations are not limited to this example and the control terminal 4 can be connected to an arbitrary number of luminaires 5. The luminaire 5 has, for example, a light emitting diode (LED) as a light source.

The light sensor 6 detects brightness. The light sensor 6 is arranged, for example, within the illumination area of a particular luminaire 5. Consequently, the brightness detected by the light sensor 6 is correlated with actual illuminance within the illumination area illuminated by the particular luminaire 5. The light sensor 6 is provided, for example, on a desk, on a floor or on a ceiling.

The wireless transmitter 7 accepts a user's operation to the luminaire 5 and transmits the accepted operation content to the wireless receiver 8 via wireless communication. For example, the wireless transmitter 7 transmits the operation content using infrared rays. The wireless receiver 8 receives the user's operation content transmitted from the wireless transmitter 7 and outputs the received operation content to the central control device 100 via the transmission line 2.

The motion sensor 9 detects the presence of a person. Hereinafter, a case where the motion sensor 9 is a monitoring camera is described as an example and the motion sensor 9 is also referred to as a "monitoring camera". Each of the plural motion sensors 9 picks up a monitoring image and outputs the picked-up monitoring image to the central control device 100 via the transmission line 2.

### Example of Configuration of Central Control Device According to First Embodiment

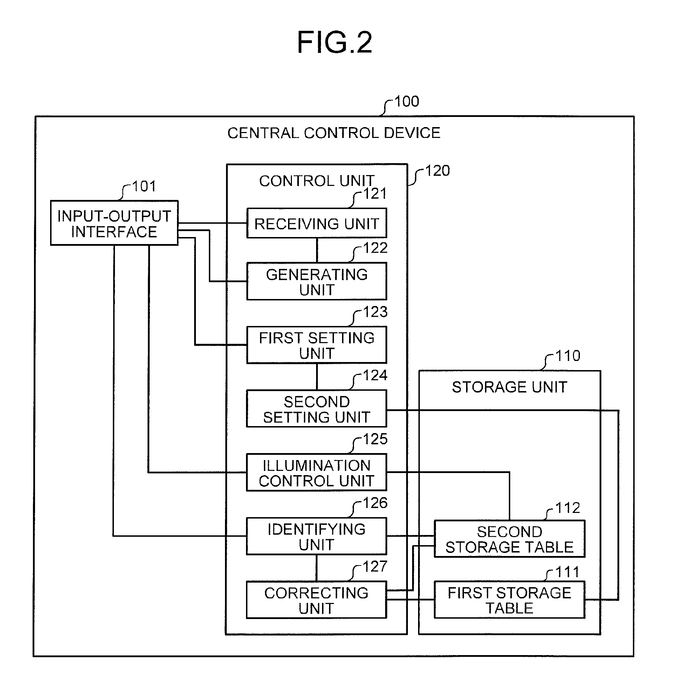

FIG. 2 is a block diagram showing an example of the configuration of the central control device according to the first embodiment. In the example shown in FIG. 2, the central control device 100 includes an input-output interface 101, a storage unit 110, and a control unit 120. As described in detail below, the central control device 100 sets a monitoring part in each monitoring image.

The input-output interface 101 is connected to the control unit 120. The input-output interface 101 inputs information from and outputs information to each unit in the illumination control system 10 via the transmission line 2.

The storage unit 110 is connected to the control unit 120. The storage unit 110 stores data used for various kinds of processing by the control unit 120. The storage unit 110 is, for example, a semiconductor memory device such as RAM (random access memory), ROM (read only memory) or flash memory, or a hard disk, optical disk and the like. In the example shown in FIG. 2, the storage unit 110 has a first storage table 111 and a second storage table 112. The first storage table 111 and the second storage table 112 are also referred to as a "first storage unit" and a "second storage unit", respectively.

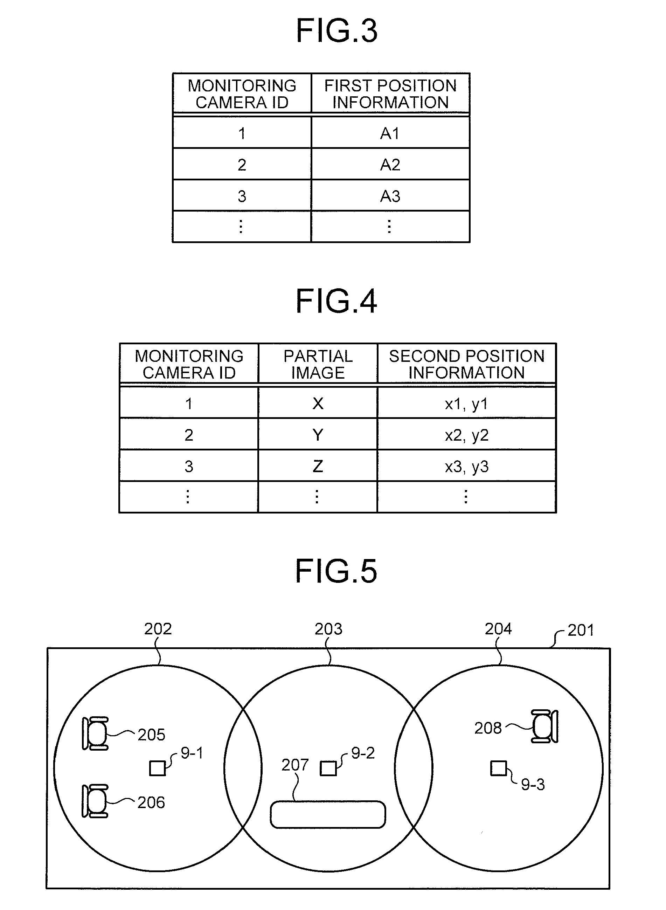

The first storage table 111 stores first position information for identifying the monitoring part that is set in the monitoring image, for each monitoring image. FIG. 3 shows an example of information stored in the first storage table in the first embodiment. As shown in FIG. 3, the first storage table 111 stores "monitoring camera ID" for identifying an arbitrary monitoring camera, of the plural monitoring cameras, and first position information. In the example shown in FIG. 3, the first storage table 111 stores first position information "A1" in correspondence to a monitoring camera ID "1". That is, in the example shown in FIG. 3, the first storage table 111 stores that, of the monitoring images picked up by the monitoring camera ID "1", an image part identified by the first position information "A1" is set as a monitoring part.

The example shown in FIG. 3 describes a case where "A1", "A2", "A3" and the like are stored as the first position information for identifying monitoring parts, for convenience of explanation. Here, the first position information may be any arbitrary information that can identify the monitoring part. For example, the first position information may be coordinate information indicating the contours of the monitoring part, or the coordinates of each of vertices if the monitoring part is rectangular.

The second storage table 112 stores a partial image of an arbitrary part of the monitoring image and second position information for identifying the partial image in correspondence to each other, for each monitoring image. FIG. 4 shows an example of information stored in the second storage table in the first embodiment. As shown in FIG. 4, the second storage table 112 stores monitoring camera ID, partial image and second position information in correspondence to one another. In the example shown in FIG. 4, the second storage table 112 stores a monitoring camera ID "1", a partial image "X" and second position information "x1, y1". That is, in the example shown in FIG. 4, the second storage table 112 stores that, of the monitoring images picked up by the monitoring camera ID "1", the partial image "X" is present in the part identified by the second position information "x1, y1".

The example shown in FIG. 4 describes a case where coordinate information is used as the second position information, for convenience of explanation. However, the second position information is not limited to this example and any arbitrary information that can identify the position of the partial image may be used. In the example shown in FIG. 4, "X", "Y", "Z" and the like are described as partial images, for convenience of description. However, practically it is assumed that images themselves are stored. For example, partial images that are considered to be usable as characteristic marking in the monitoring image, such as an image of a chair or an image of a desk, are stored.

The information stored in the second storage table 112 is generated from the monitoring image in the state where the monitoring part is set. In other words, based on the monitoring image having a pickup image that remains unchanged from with the monitoring image in the state where the monitoring part is set, the correspondence between the monitoring camera ID, the partial image and the second position information is generated by the control unit 120 and stored in the second storage table 112. If the camera position of the monitoring camera changes because of vibration or the like, the range of pickup of the picked-up image by the monitoring camera may change accordingly. Considering these facts, the correspondence stored in the second storage table 112 is generated based on the monitoring image that is the same as the monitoring image where the monitoring part is set or the monitoring image obtained by picking up the same range, and is housed in the second storage table 112.

The control unit 120 is connected to the input-output interface 101 and the storage unit 110. The control unit 120 has an internal memory which stores a program prescribing various processing procedures or the like, and controls various kinds of processing. The control unit 120 is, for example, an ASIC (application specific integrated circuit), FPGA (field programmable gate array), CPU (central processing unit), MPU (micro processing unit) or the like. In the example shown in FIG. 2, the control unit 120 includes a receiving unit 121, a generating unit 122, a first setting unit 123, a second setting unit 124, an illumination control unit 125, an identifying unit 126, and a correcting unit 127.

The receiving unit 121 receives each monitoring image picked up by each of the plural monitoring cameras. FIG. 5 shows an example of the relation between the motion sensor and the monitoring image in the first embodiment. In the example shown in FIG. 5, three motion sensors 9-1 to 9-3 are provided in a room 201. In the example shown in FIG. 5, the motion sensors 9-1 to 9-3 pick up monitoring images 202 to 204. In the example shown in FIG. 5, various objects 205 to 208 are placed in the room 201.

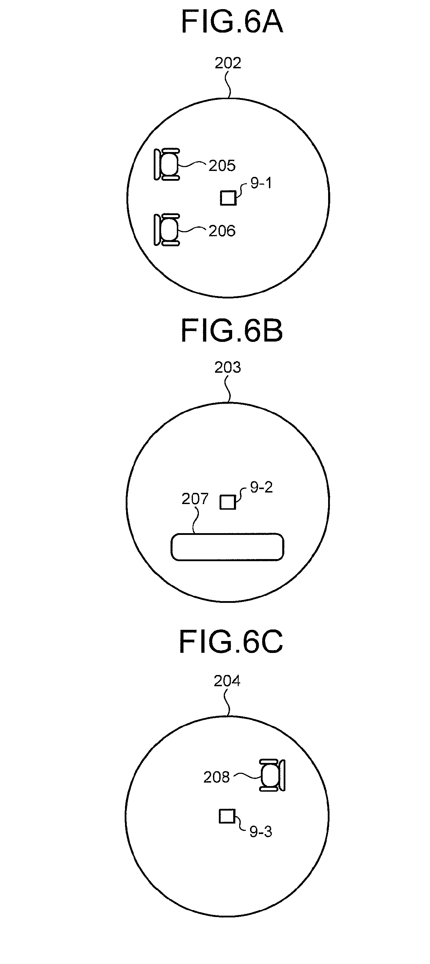

FIGS. 6-1 to 6-3 show examples of the monitoring image received in the case shown in FIG. 5 by the receiving unit of the first embodiment. Hereinafter, a case where the receiving unit 121 receives each monitoring image from the three motion sensors 9 is described. However, possible configurations are not limited to this example and the receiving unit 121 may receive each monitoring image from an arbitrary number of motion sensors 9.

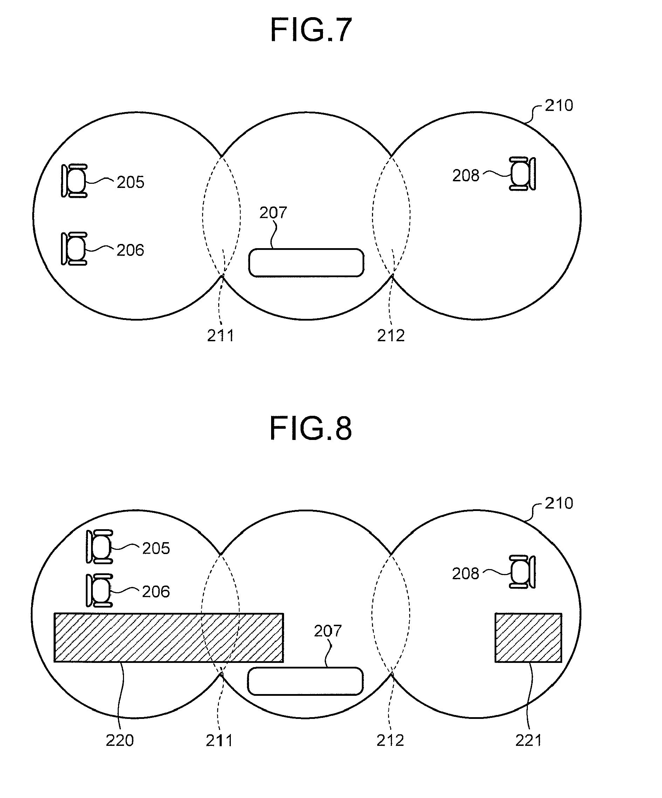

The generating unit 122 integrates each monitoring image from each monitoring camera received by the receiving unit 121 and thus generates one integrated image. FIG. 7 shows an example of the integrated image generated by the generating unit of the first embodiment. In the example shown in FIG. 7, the generating unit 122 superimposes overlapping parts 211 and 212, of monitoring images 202 to 204, and thus generates an integrated image 210.

If the monitoring cameras use a fisheye lens, the generating unit 122 integrates the monitoring images after correcting a distortion in each monitoring image, and thus generates an integrated image. The generating unit 122 may generate an integrated image using a known arbitrary technique.

The first setting unit 123 sets a monitoring part that is an image part to be a target of detection processing for detecting the presence or absence of a person, in the integrated image generated by the generating unit 122. For example, as the first setting unit 123 accepts a setting of an image part that is not covered as a target of detection processing from the user, the first setting unit 123 sets a part excluding the accepted image part, in the monitoring image. Also, for example, as the first setting unit 123 accepts a setting of a monitoring part in the integrated image from the user, the first setting unit 123 sets the accepted part as a monitoring part.

Amore detailed example will now be described. The first setting unit 123, for example, displays an integrated image to the user and accepts a designation of a part in the displayed integrated image from the user. For example, if pixels forming the integrated image are expressed by XY coordinates and each of pixels included within a range of X coordinate values "P1" to "P2" and a range of Y coordinate values "P3" to "P4" is designated by the user, the first setting unit 123 sets each of the pixels of the designated range as a monitoring part in the integrated image. "P1 to "P4" are arbitrary values. In the above example, the monitoring part set by the user is rectangular. However, the monitoring part is not limited to this example and may be of an arbitrary shape. The designation of the monitoring part by the user is not limited to the designation using XY coordinates and an arbitrary technique may be used.

FIG. 8 shows an example of the monitoring part that is set by the first setting unit in the first embodiment. The example shown in FIG. 8 describes a case where the first setting unit 123 sets a monitoring part 220 and a monitoring part 221 as monitoring parts in the integrated image 210. In this example, as shown in FIG. 8, the monitoring part 220 is also set in the part 211 where the monitoring image 202 obtained by the motion sensor 9-1 and the monitoring image 203 obtained by the motion sensor 9-2 overlap each other.

The second setting unit 124 allocates the monitoring part that is set in the integrated image by the first setting unit 123 to each monitoring image from each monitoring camera in a non-overlapping manner and thus sets the monitoring part in each monitoring image. Specifically, if the monitoring part is set in a part where the monitoring images corresponding to the respective motion sensors 9 overlap each other, the monitoring part is set in such a way that the set part is allocated to one of the monitoring images. In this case, the second setting unit 124 may divide the monitoring part that is set in the part where the monitoring images corresponding to the respective motion sensors 9 overlap each other, and may allocate each division part to separate monitoring images.

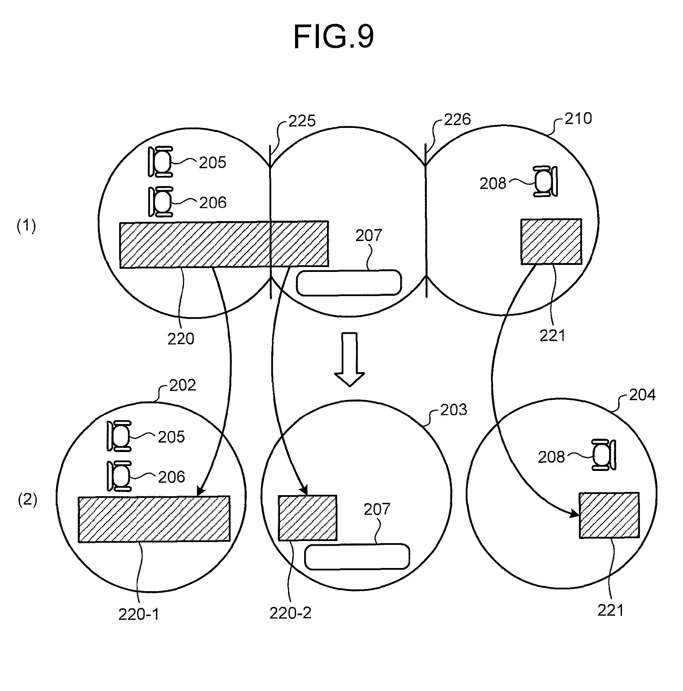

For example, the second setting unit 124 sets a boundary in the part where plural monitoring images overlap each other in the integrated image, and allocates the monitoring part set in the integrated image to each of the monitoring images based on the boundary, thus allocating the monitoring part in a non-overlapping manner. In other words, in the part where plural monitoring images overlap each other in the integrated image, a boundary to univocally decide the monitoring image that becomes the allocation destination at the time of allocating the monitoring part is set. FIG. 9 shows an example of the monitoring part that is set in each monitoring image by the second setting unit in the first embodiment. As shown in FIG. 9 (1), the second setting unit 124 sets boundaries 225 and 226 in the parts where the monitoring images corresponding to the motion sensors 9 overlap each other, in the integrated image 210. Then, as shown in FIG. 9 (2), the second setting unit 124 divides the monitoring part 220 that is also set in the part where the monitoring images overlap each other, into monitoring parts 220-1 and 220-2 on both sides of the boundary 225, and then allocates the monitoring part 220-1 to the monitoring image 202 and allocates the monitoring part 220-2 to the monitoring image 203. The second setting unit 124 also allocates the monitoring part 221 to the monitoring image 204. Consequently, the monitoring parts are set in the monitoring images. For example, of the monitoring images, each of pixels included in a range of X coordinate values "P5" to "P6" and a range of Y coordinate values "P7" to "P8" is set as the monitoring part. "P5" to "P8" are arbitrary values. In the above example, the monitoring part set in the monitoring image is rectangular. However, the monitoring part is not limited to this example and may be of an arbitrary shape.

The second setting unit 124 stores second position information for identifying the monitoring part set in each monitoring image in correspondence to the monitoring camera ID of the monitoring image that becomes the setting destination, in the first storage table 111. For example, if the monitoring camera ID corresponding to the monitoring image 202 is "1" and the first position information for identifying the monitoring part 220-1 is "A1", the second setting unit 124 stores the monitoring camera ID "1" and the first position information "A1 in correspondence to each other in the first storage table 111.

The above example describes a case where the second setting unit 124 sets boundaries and allocates the monitoring parts to the monitoring images based on the set boundaries in a non-overlapping manner. However, the way of setting and allocation is not limited to this example and an arbitrary technique may be used. For example, the second setting unit 124 may set the monitoring part to each of the plural monitoring images and may avoid setting the part that is already set in one of the plural monitoring images, of the monitoring parts set in the integrated image, as the monitoring part again. Thus, the monitoring part may be allocated in a non-overlapping manner.

The illumination control unit 125 controls the luminaire 5 based on the result of detection processing in the monitoring part that is set in each monitoring image by the second setting unit 124. For example, if a detection result showing that there is a person in the monitoring part is obtained in the detection processing, the illumination control unit 125 outputs an instruction to switch on the luminaire 5 to the control terminal 4. Meanwhile, for example, if a detection result showing that there is no person in the monitoring part is obtained in the detection processing, the illumination control unit 125 outputs an instruction switch off the luminaire 5 to the control terminal 4.

At an arbitrary processing time, as the monitoring part is set in each monitoring image by the second setting unit 124, the identifying unit 126 extracts an arbitrary partial image from the monitoring image in which the monitoring part is set, and stores the extracted partial image, second position information for identifying the position where the partial image is extracted, and the monitoring camera ID of the monitoring image from which the partial image is extracted, in correspondence to one another in the second storage table 112. For example, if an image "X" located at a position "x1 y2" is extracted from the monitoring image 202, the identifying unit 126 stores the monitoring camera ID "1", the partial image "X" and the second position information "x1 y2" in correspondence to one another.

The identifying unit 126 also identified the partial image from the monitoring image received by the receiving unit 121. Specifically, at an arbitrary processing time, the identifying unit 126 acquires the monitoring camera ID and the partial image from the second storage table 112 and identifies the acquired partial image from the monitoring image of the monitoring camera identified by the acquired monitoring camera ID. For example, in FIG. 6-1, if the partial image of the object 205 is stored in the second storage table 112, the partial image corresponding to the object 205 is identified from the monitoring image. The identification processing by the identifying unit 126 may be arbitrary image recognition processing. Here, the arbitrary processing time may be an arbitrary time, for example, every time the monitoring image is received, a time point after a predetermined time period, a time point designated by the user, or a time point when an instruction from the user is accepted.

If there is a shift between the second position information read out from the second storage table 112 and the position of the partial image identified by the identifying unit 126, the correcting unit 127 corrects the position of the monitoring part identified by the first position information stored in the first storage table 111 by an amount equivalent to the shift.

Specifically, the correcting unit 127 acquires the correspondence between the monitoring camera ID and the second position information from the second storage table 112 and determines whether there is a shift between the position of the partial image identified by the identifying unit 126 and the position indicated by the acquired second position information, for each monitoring image identified by the monitoring camera ID. Then, if the correcting unit 127 determines that there is a shift, the correcting unit 127 corrects the position of the monitoring part. For example, the correcting unit 127 acquires the first position information corresponding to the monitoring camera ID that is a processing target from the second storage table 112, and corrects the acquired first position information by the amount of the shift. In other words, the correcting unit 127 moves the position of the monitoring part by the amount equivalent to the shift, in the monitoring image that is determined as having the shift. Meanwhile, if the correcting unit 127 determines that there is no shift, the correcting unit 127 ends the processing there without making any correction.

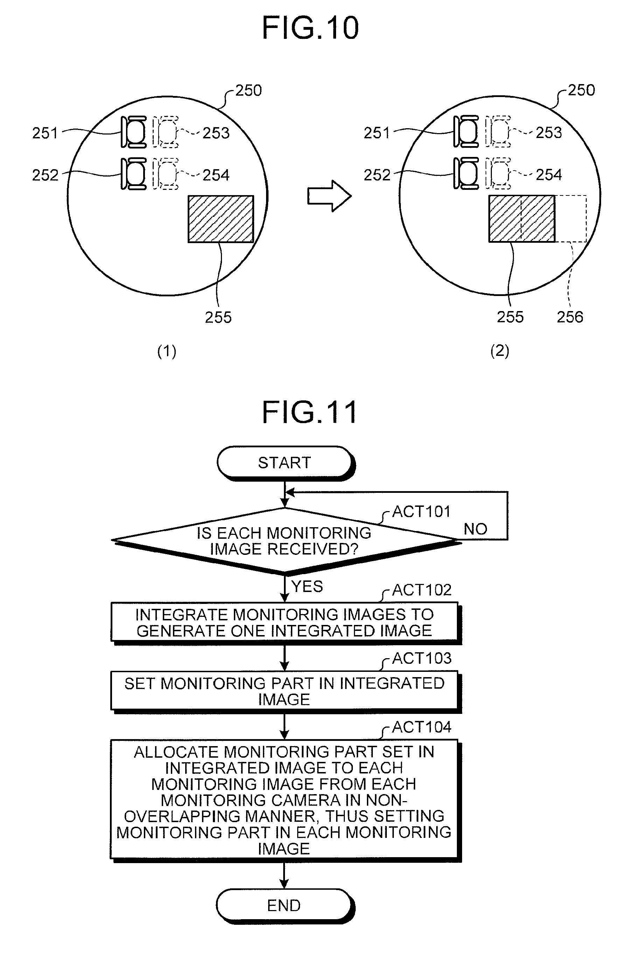

FIG. 10 is a view for explaining the identifying unit and the correcting unit of the first embodiment. In FIG. 10, an example where a monitoring image 250 is a processing target is described. In the monitoring image 250, objects 251 and 252 extracted as partial images are shown and a monitoring part 254 is set. The example shown in FIG. 10 (1) is described on the assumption that the objects 251 and 252 are located at parts 253 and 254, respectively, at the stage where the partial images are extracted. In other words, this example describes a case where, in the monitoring image 250, the positions where the objects 251 and 252 are shown are shifted from the positions as of the time point when the monitoring parts are set.

At an arbitrary processing time, the correcting unit 127 identifies the objects 251 and 252 that are partial images in the monitoring image 250 shown in FIG. 10. Then, the correcting unit 127 determines whether there is a shift between the position of the partial images identified by the identifying unit 126 and the position indicated by the acquired second position information. In other words, the correcting unit 127 determines whether there is a shift between the parts 253 and 254 and the positions of the objects 251 and 252 in the monitoring image 250. Here, in the example shown in FIG. 10, there is a shift and the correcting unit 127 acquires the first position information for identifying the position of the monitoring part 255 stored in the second storage table 112 and corrects the acquired first position information by the amount of the shift. For example, a case where the acquired first position information is expressed by coordinate values in an XY coordinate system and where the objects 251 and 252 are shifted by "α" in minus direction in the X coordinate system in the monitoring image 250 is described. In this case, the correcting unit 127 changes each value on X axis of the first position information A1 by "α" in minus direction and thus corrects the position of the monitoring part 255. Consequently, in the example shown in FIG. 10 (2), the position of the monitoring part 255 is corrected from a part 256 where the monitoring part 255 is originally set, by the amount of the shift. In other words, the range shown in the monitoring part 255 is the same as the range shown in the part 256 before the occurrence of the shift.

### Example of Processing by Central Control Device According to First Embodiment

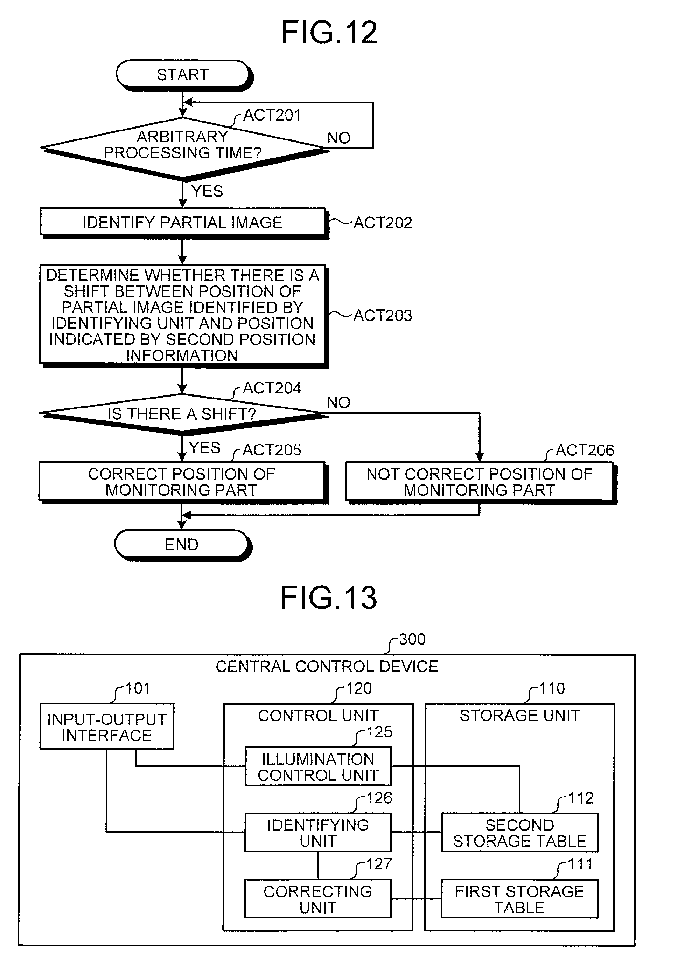

An example of processing by the central control device according to the first embodiment will be described with reference to FIGS. 11 and 12. Specifically, an example of the flow of monitoring part setting processing and an example of the flow of monitoring part correcting processing will be described in order.

### Example of Flow of Monitoring Part Setting Processing by Central Control Device According to First Embodiment

FIG. 11 is a flowchart showing an example of the flow of monitoring part setting processing by the central control device according to the first embodiment.

As shown in FIG. 11, in the central control device 100, as the receiving unit 121 receives each monitoring image picked by each of the plural monitoring cameras (ACT 101, Yes), the generating unit 122 integrates the monitoring images and generates one integrated image (ACT 102). For example, overlapping parts of the plural monitoring images are superimposed to generate the integrated image.

Then, the first setting unit 123 sets, in the integrated image, a monitoring part that is an image part to be a target of detection processing for detecting the presence or absence of a person (ACT 103). For example, the first setting unit 123 displays the integrated image to the user and accepts the designation of a part from the user in the displayed integrated image. Then, the first setting unit 123 sets the part designated by the user as a monitoring part.

Then, the second setting unit 124 allocates the monitoring part set in the integrated image to monitoring image from each monitoring camera in a non-overlapping manner and thus sets the monitoring part in each monitoring image (ACT 104). For example, the second setting unit 124 sets a boundary in a part where plural monitoring images overlap each other in the integrated image, and allocates the monitoring part set in the integrated image to each monitoring image based on the set boundary, thus allocating the monitoring part in a non-overlapping manner.

### Example of Flow of Monitoring Part Correction Processing by Central Control Device According to First Embodiment

FIG. 12 is a flowchart showing an example of the flow of monitoring part correction processing by the central control device according to the first embodiment.

As shown in FIG. 12, in the central control device 100, at an arbitrary processing time (ACT 201, Yes), a partial image acquired from the monitoring image is identified (ACT 202). For example, the identifying unit 126 acquires a monitoring camera ID and a partial image from the second storage table 112 and identifies the acquired partial image from the monitoring image of the monitoring camera identified by the acquired monitoring camera ID.

The correcting unit 127 determines whether there is a shift between the position of the partial image identified by the identifying unit 126 and the position indicated by the acquired second position information (ACT 203). For example, the correcting unit 127 acquires the correspondence between the monitoring camera ID and the second position information from the second storage table 112 and determines whether there is a shift between the position of the partial image identified by the identifying unit 126 and the position indicated by the acquired second position information, for each monitoring image identified by the monitoring camera ID.

Here, if the correcting unit 127 determines that there is a shift (ACT 204, Yes), the correcting unit 127 corrects the position of the monitoring part (ACT 205). For example, the correcting unit 127 acquires the first position information corresponding to the monitoring camera ID that is the processing target from the second storage table 112, and corrects the acquired first position information by the amount of the shift. In other words, the correcting unit 127 moves the position of the monitoring part by the amount of the shift, in the monitoring image that is determined as having the shift. Meanwhile, if the correcting unit 127 determines that there is no shift (ACT 204, No), the correcting unit 127 ends the processing there, making no correction (ACT 206).

### Advantages of Illumination Control System According to First Embodiment

As described above, the illumination control system 10 according to the first embodiment includes the luminaire 5, the plural monitoring cameras, and the central control device 100. The central control device 100 receives each monitoring image picked up by each of the plural monitoring cameras and integrates the received monitoring images from each monitoring camera to generate one integrated image. Also, the central control device 100 sets a monitoring part in the integrated image. The central control device 100 allocates the monitoring part set in the integrated image to each monitoring image from each monitoring camera in a non-overlapping manner, thus setting the monitoring part in each monitoring image. The central control device 100 controls the luminaire 5 based on the result of detection processing in the monitoring part set in each monitoring image. Consequently, the monitoring part can be set properly.

For example, if there are plural monitoring cameras and monitoring images picked up by the monitoring cameras partly overlap each other, it is considered that the same point is included in monitoring parts of different monitoring cameras. In this case, it is considered that which monitoring camera's set monitoring part should be linked to control the lighting that illuminates the point monitored by the plural monitoring cameras is unclear. In the illumination control system according to the embodiment, there is no overlapping of monitoring parts and a luminaire and a monitoring part can be linked to each other simply and securely. Also, compared with a technique where the user separately sets a monitoring area for each monitoring camera, images present in the same space are combined into one image and an area is set on the combined image, thus enabling the setting without having to worry about a shift of boundaries between the cameras. Moreover, compared with a technique where an area is set in each monitoring image from each monitoring camera, a setting of a monitoring part in each monitoring image that is deviated from the actual situation can be prevented. Also, for example, the user can set a monitoring part in one integrated image, and after that, the central control device 100 divides the integrated image into monitoring parts of each monitoring camera. Therefore, there is no shift of boundaries between monitoring parts set for each monitoring camera and erroneous detection can be prevented.

Also, according to the illumination control system 10 of the first embodiment, if a setting of an image part that is not covered as a target of detection processing is accepted from the user, a part excluding the accepted image part is set in the monitoring image. Consequently, as a setting of a monitoring part is accepted from the user in terms of the integrated image, the user can easily set a monitoring part in each monitoring image from the plural monitoring cameras.

Also, according to the illumination control system 10 of the first embodiment, a boundary is set in a part where plural monitoring images overlap each other in the integrated image, and the monitoring part set in the integrated image is allocated to each monitoring image based on the set boundary, thus allocating the monitoring part in a non-overlapping manner. Consequently, the monitoring part can be allocated securely without overlapping.

Also, according to the illumination control system 10 of the first embodiment, a monitoring part is set in each of the plural monitoring images, and a part that is already set in one of the plural monitoring images, of the monitoring part that is set in the integrated image, is not set as a monitoring part again. Thus, the monitoring part is allocated in a non-overlapping manner. Consequently, the monitoring part can be allocated securely without overlapping.

Also, according to the illumination control system 10 of the first embodiment, the integrated image is generated by integrating the monitoring images after correcting a distortion in the overlapping part. Consequently, the integrated image can be generated properly. If the lens used in the monitoring camera has a large angle of view, the monitoring image obtained by the monitoring camera is distorted. For example, if a fisheye lens, wide-angle lens or the like, or a lens with an angle of view of 180 degree or greater is used, a distortion particularly occurs. However, by integrating the monitoring images after correcting the distortion, the monitoring part can be set in the integrated image where linearity of the areas is maintained. In the overlapping part between monitoring images, that is, a peripheral area of each monitoring image, the direction of distortion and the amount of distortion in each area differ from each other and it is difficult to maintain linearity of the area when integrating the monitoring images. Thus, by integrating the monitoring images after correcting the distortion of the overlapping part in advance, linearity of the area in the integrated image can be maintained. In the correction of the distortion, it suffices to correct at least the distortion of the overlapping part of each monitoring image. However, a better integrated image can be obtained by correcting the distortion of other areas.

Moreover, according to the illumination control system 10 of the first embodiment, first position information for identifying the monitoring part set in the monitoring image is stored for each monitoring image, and a partial image of an arbitrary part of the monitoring image and second position information for identifying the partial image are stored in correspondence to each other for each monitoring image. Also, according to the illumination control system 10, the partial image is identified from the monitoring image, and if there is a shift between the second position information and the position of the identified partial image, the position of the monitoring part identified by the first position information is corrected by an amount equivalent to the shift. Consequently, detection processing can be securely executed in the set monitoring part.

That is, if the camera position of the monitoring camera changed because of vibrating, shaking or rotating, the position of the monitoring image picked up by the monitoring camera changes as well. Here, the monitoring part may be set in terms of pixel position in the monitoring image, and it is considered that the position of the monitoring part changes if the camera position changes. According to the illumination control system of the embodiment, even if the camera position changes, the position of the monitoring part is corrected. Therefore, even if there is a change in the camera position, the set monitoring part can be monitored. In other words, as automatic adjustment is made to correct the shift, the set monitoring part can be monitored. That is, a characteristic image is stored as marking from the actual image, and based on the result of matching and comparison with an image of a sensor detection area that is saved, the sensor detection area is corrected in accordance with the actual image. Thus, erroneous detection can be prevented. Consequently, detection processing can be securely executed in the set monitoring part without carrying out maintenance in case of change in the camera position, and a system with improved maintenance property can be provided.

### Second Embodiment

While the first embodiment is described up to this point, possible embodiments are not limited to the first embodiment and other embodiments may also be used. Thus, hereinafter, other examples of embodiment will be described.

For example, of each processing described in the first embodiment, the whole or part of processing that is described as automatically carried out can be manually carried out, or the whole or part of processing that is described as manually carried out may be automatically carried out by a known technique. In addition, information including processing procedures, control procedures, specific names, various data and parameters described in the above text or shown in the drawings (for example, FIGS. 1 to 12) can be arbitrarily changed unless otherwise stated.

Each component of each device shown in the drawings is a functional and conceptual representation and need not necessarily be configured physically as in the drawings. That is, specific forms of dispersion and integration of each device are not limited to the illustrated forms. The whole or part of each unit can be functionally or physically dispersed or integrated in arbitrary units according to various loads, status of use and the like. In the case of FIG. 2, for example, the storage unit 110 may be connected as an external device via a network. Also, the central control device may carry out monitoring part correction processing without carrying out setting processing. FIG. 13 is a block diagram showing an example of the configuration of a central control device which carries out monitoring part correction processing without carrying out monitoring part setting processing. As shown in FIG. 13, a central control device 300 does not include the receiving unit 121, the generating unit 122, the first setting unit 123 and the second setting unit 124, compared with the central control device 100 shown in FIG. 2.

While several embodiments are described above, these embodiments are presented as examples and are not intended to limit the scope of the invention. These embodiments can be carried out in various other forms, and various omissions, replacements and changes can be made without departing from the scope of the invention. These embodiments and modifications thereof are included in the scope and spirit of the invention and are similarly included in the scope of the inventions described the accompanying claims and equivalents thereof.

## Claims

1. An illumination control system (10) comprising:
a luminaire (5);
plural monitoring cameras (9); and
a central control device (100) comprising a receiving unit which configured to receive monitoring images that include one monitoring image picked up by each of the plural monitoring cameras (9), a generating unit (122) configured to integrate the monitoring images and generates one integrated image, a first setting unit (123) configured to set a monitoring part in the integrated image generated by the generating unit (122), a second setting unit (124) configured to allocate the monitoring part that is set in the integrated image by the first setting unit (123) to each of the monitoring images from the monitoring cameras (9) in a non-overlapping manner and set each of the allocated monitoring parts in a respective one of the monitoring images, and an illumination control unit (125) configured to control the luminaire (5) based on a result of detection processing in the allocated monitoring parts.

2. The system (10) according to claim 1, wherein when the first setting unit (123) accepts from a user a setting of an image part that is not covered as a target of the detection processing, the first setting unit (123) sets a part excluding the image part from being monitored.

3. The system (10) according to claim 1 or 2, wherein the second setting unit (124) allocates the monitoring part in a non-overlapping manner by setting a boundary in a part where plural monitoring images overlap each other in the integrated image and by allocating the monitoring parts based on the boundary that is set.

4. The system (10) according to claim 1 or 2, wherein the second setting unit (124) allocates the monitoring part in a non-overlapping manner by setting a monitoring part in each of the plural monitoring images and not setting a part that is already set in one of the plural monitoring images as the monitoring part.

5. The system (10) according to one of claims 1 to 4, wherein the generating unit (122) generates the integrated image by integrating the monitoring images after correcting a distortion in an overlapping part of each of the monitoring images.

6. The system (10) according to one of claims 1 to 5, further comprising:
a first storage unit (111) configured to store, for each of the monitoring images, first position information for identifying the monitoring part that is set in the monitoring image;
a second storage unit (112) configured to store, for each of the monitoring images, a partial image of an arbitrary part of the monitoring image and a second position information for identifying the partial image;
an identifying unit (126) configured to identify the partial image in the monitoring image received by the receiving unit; and
a correcting unit (127) configured to correct a position of the monitoring part identified based on the first position information stored in the first storage unit (111), by an amount equivalent to a shift between the second position information read out from the second storage unit (112) and a position of the partial image identified by the identifying unit (126).

7. A central control device (100) comprising:
a receiving unit which configured to receive monitoring images picked up by plural monitoring cameras (9);
a generating unit (122) configured to integrate the monitoring images and generate one integrated image;
a first setting unit (123) configured to set a monitoring part in the integrated image generated by the generating unit (122);
a second setting unit (124) configured to allocate the monitoring part to each of the monitoring images from the monitoring cameras (9) in a non-overlapping manner and set each of the allocated monitoring parts in a respective one of the monitoring images; and
an illumination control unit (125) configured to control the luminaire (5) based on a result of detection processing in the allocated monitoring parts.

8. The device (100) according to claim 7, wherein when the first setting unit (123) accepts from a user a setting of an image part that is not covered as a target of the detection processing, the first setting unit (123) sets a part excluding the image part from being monitored.

9. The device (100) according to claim 7 or 8, wherein the second setting unit (124) allocates the monitoring part in a non-overlapping manner by setting a boundary in a part where plural monitoring images overlap each other in the integrated image and allocating the monitoring parts based on the boundary that is set.

10. The device (100) according to claim 7 or 8, wherein the second setting unit (124) allocates the monitoring part in a non-overlapping manner by setting a monitoring part in each of the plural monitoring images and by not setting a part that is already set in one of the plural monitoring images, as the monitoring part.

11. The device (100) according to one of claims 7 to 10, wherein when the monitoring cameras use a fisheye lens, and the generating unit (122) generates the integrated image by integrating the monitoring images after correcting a distortion in an overlapping part of each of the monitoring images.

12. The device (100) according to one of claims 7 to 11, further comprising:
a first storage unit (111) configured to store, for each of the monitoring images, first position information for identifying the monitoring part that is set in the monitoring image;
a second storage unit (112) configured to store, for each of the monitoring images, a partial image of an arbitrary part of the monitoring image and a second position information for identifying the partial image;
an identifying unit (126) which identifies the partial image in the monitoring image received by the receiving unit; and
a correcting unit (127) configured to correct a position of the monitoring part identified based on the first position information stored in the first storage unit (111), by an amount equivalent to a shift between the second position information read out from the second storage unit (112) and a position of the partial image identified by the identifying unit (126).
